# EUROPÄISCHE PATENTSCHRIFT

(11) **EP 1 177 113 B1**
(45) Veröffentlichungstag und Bekanntmachung des Hinweises auf die Patenterteilung: **02.07.2003**
(21) Anmeldenummer: 00926930.9
(22) Anmeldetag: 14.04.2000
(51) Int. Cl.: B60G 1/00

(54) **RADAUFHÄNGUNG FÜR EINE VORDERACHSE EINES KRAFTFAHRZEUGES**
WHEEL SUSPENSION FOR A FRONT AXLE OF AN AUTOMOBILE
SUSPENSION DE ROUE D'UN ESSIEU AVANT D'UN VEHICULE AUTOMOBILE

(30) Priorität: 03.05.1999 DE 19920106; 15.02.2000 DE 10006676
(43) Veröffentlichungstag der Anmeldung: 06.02.2002
(73) Patentinhaber: Dr. Ing. H.C.F. Porsche Aktiengesellschaft, 70435 Stuttgart (DE)
(72) Erfinder: SCHOTE, Norbert, D-72119 Ammerbuch (DE)
(86) Internationale Anmeldenummer: EP0003374
(87) Internationale Veröffentlichungsnummer: WO00066377

(56) Entgegenhaltungen:
- EP-A- 0 655 355
- EP-A- 0 656 270
- DE-A- 4 012 418
- DE-A- 4 108 164
- US-A- 5 496 055
- MULLER E ET AL: "DAS FAHRWERK DES NEUEN AUDI 80" ATZ AUTOMOBILTECHNISCHE ZEITSCHRIFT,DE,FRANCKH'SCHE VERLAGSHANDLUNG. STUTTGART, Bd. 94, Nr. 5, 1. Mai 1992 (1992-05-01), Seiten 248-250,252-25, XP000270956 ISSN: 0001-2785
- "ADVERTISEMENT" REVUE TECHNIQUE AUTOMOBILE,FR,ETAI. BOULOGNE-BILLANCOURT, Bd. 48, Nr. 552, 1. Juni 1993 (1993-06-01), Seiten LXIV,LXVI-LXVII, XP000383460 ISSN: 0017-307X
- "ANNOUNCEMENT" ATZ AUTOMOBILTECHNISCHE ZEITSCHRIFT,DE,FRANCKH'SCHE VERLAGSHANDLUNG. STUTTGART, Bd. 96, Nr. 12, 1. Dezember 1994 (1994-12-01), Seiten 734-736,743-74, XP000486412 ISSN: 0001-2785

## Beschreibung

Die Erfindung bezieht sich auf eine Radaufhängung für eine Vorderachse eines Kraftfahrzeuges nach dem Oberbegriff des Anspruchs 1.

Aus der gattungsgemäßen DE 40 12 418 Al ist eine Radaufhängung in Doppelquerlenkerbauweise bekannt, die endseitig eines hochgezogenen Schwenklagers einen Querlenker aufweist, der in einem aufbauseitig gehaltenen Halter schwenkbar gelagert ist, welcher auch das obere Ende eines Feder-/Dämpferbeines abstützt. Am weiteren unteren am Schwenklager angelenkten Querlenker ist das andere Ende des Feder-/Dämpferbeines gehalten. Desweiteren ist aus Matschinsky, W., "Die Radführungen der Straßenfahrzeuge", Verlag TÜV Rheinland, 1987, S. 246, Bild 11.2, eine Einzelradaufhängung für lenkbare Räder mit zwei übereinander angeordneten Querlenkern bekannt, die aus Dreieckslenkern bestehen, welche über jeweils ein Lager am Schwenklager gehalten sind und die aufbauseitigen Lager auf schräg zur Fahrzeuglängsmittenachse angeordneten Achsen gehalten sind.

Aufgabe der Erfindung ist es, eine Radaufhängung für lenkbare Räder einer Vorderachse eines Kraftfahrzeugs zu schaffen, die unter Einwirkung von Kräften auf das Rad ein leicht untersteuerndes Fahrverhalten bei Kurvenfahrt und Geradeausfahrt realisiert.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß das Fahrverhalten des Fahrzeugs, insbesondere eines Geländefahrzeugs, bei auf das Rad einwirkenden Kräften, wie beispielsweise Brems-, Seiten- und Beschleunigungskräften leicht untersteuernd bleibt und keine wesentlichen Radstellungsänderungen unter diesen Kräften erfolgen sollen, welche das Fahrverhalten bei Kurven- als auch bei Geradeausfahrt ungünstig beeinflussen können und ein instabiles Fahrverhalten verursacht.

Diese Vorteile werden im wesentlichen dadurch erzielt, daß insbesondere die Lage elastokinematischen Schwenkachse der Radaufhängung aufgrund der Positionierung des oberen und unteren Querlenkers übereinander in Bezug zur senkrechten Radmittenquerebene und der aufeinander abgestimmten weichen und harten Kennungen der aufbauseitigen Lenkerlager in radialen und axialen Belastungsrichtungen bestimmt wird.

Im wesentlichen werden die vorteilhaften Wirkungen der Vorder-Radaufhängung dadurch erzielt, daß ein schwenklagerseitiges Lager des oberen Querlenkers sowie ein Lager der Spurstange am Schwenklager - in Bezug auf die Fahrtrichtung - hinter einer senkrechten Radmittenquerebene angeordnet ist. Desweiteren liegt ein entsprechendes weiteres schwenklagerseitiges Lager des unteren Querlenkers - in Bezug auf die Fahrtrichtung vor der senkrechten Radmittenquerebene derart, daß sich die geometrische Schwenkachse bzw. die Nachlaufachse mit einem Durchstoßpunkt in der Radaufstandsebene außerhalb und nahe der Spurweite bzw. nahe der Radebene und vor der senkrechten Radmittenquerebene ergibt. Durch das schwenklagerseitige Lager des unteren Querlenkers und durch das schwenklagerseitige Lager der Spurstange verlaufen Polstrahlen, die im Schnittpunkt einen unteren Pol für die elastokinematische Schwenkachse bilden, welche - in Bezug auf die Fahrtrichtung - hinter der senkrechten Radmittenquerebene und nahe der Spurweite einen Durchstoßpunkt in der Radaufstandsebene aufweist. Das schwenklagerseitige Lager des obenliegenden Querlenkers bildet einen oberen Pol für die elastokinematische Schwenkachse und bestimmt die Lage der Schwenkachse mit. Die Polstrahlen verlaufen entlang des einen vorderen Radführungsarmes des unteren Querlenkers und entlang der Spurstange, wodurch die Richtung der Polstrahlen vorgegeben ist.

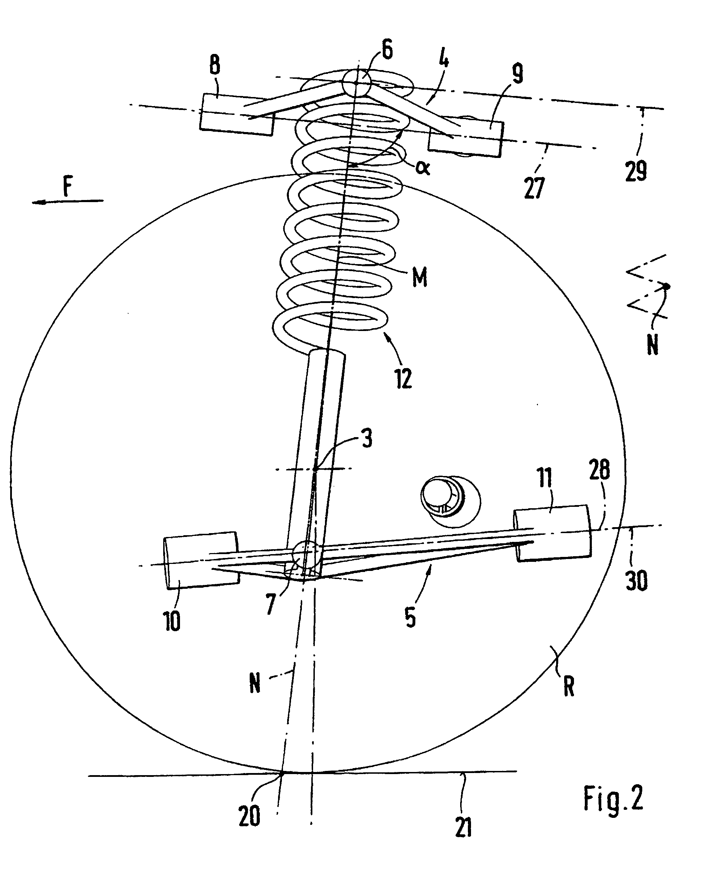

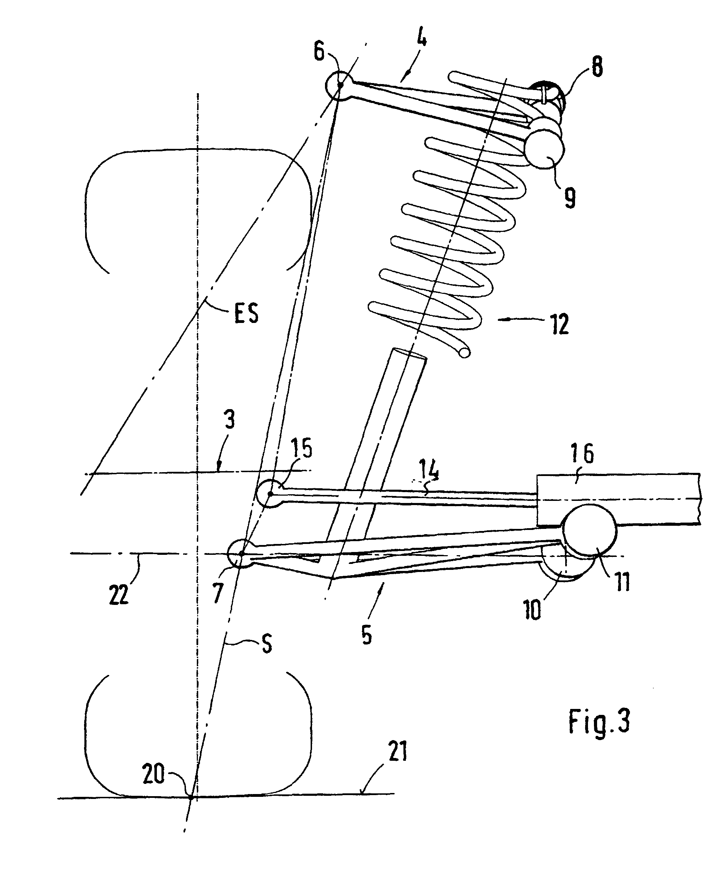

Das Dämpferbein ist - in Seitenansicht (Fig. 2) des Rades gesehen - in einer Querebene mit der Nachlaufachse angeordnet, wobei in einer Vorderansicht (Fig. 3) auf das Rad gesehen die Mittenachse des Dämpferbeines weniger steil zur Radaufstandsebene angestellt ist als die Nachlaufachse bzw. die geometrische Schwenkachse.

Am unteren Querlenker ist ein Dämpferbein mit seinem unteren Ende gehalten, wobei das obere Ende in einem Lagertopf schwenkbar abgestützt ist. Dieser ist mit dem Fahrzeugaufbau verbunden und nimmt zwei auf einer Schwenkachse angeordnete Lager des oberen Querlenkers auf.

Zur Erzielung einer Antidive- und Antisquat-Wirkung ist die Schwenkachse der beiden aufbauseitigen Lager des oberen Querlenkers - in Seitenansicht auf das Rad gesehen - nach hinten - in Bezug auf die Fahrtrichtung - zur Radaufstandsebene geneigt und die Schwenkachse der beiden aufbauseitigen Lager des unteren Querlenkers ist - in Bezug auf die Fahrtrichtung - nach hinten ansteigend derart ausgeführt, daß sich parallel zu diesen Achsen durch die schwenklagerseitigen Lager der beiden Querlenker verlaufende Strahlen ein Nickpol für einen Antidive und ein Antisquat oberhalb der Raddrehachse ergibt.

Durch eine vorbestimmte Lage der geometrischen Schwenkachse - um die sich die Räder bei einer Lenkbewegung verstellen - und der elastokinematischen Schwenkachse wird eine Position zum Rad und zur Radaufstandsfläche möglich, die Radstellungsänderungen für ein leicht untersteuerndes Fahrverhalten möglich macht. So sind hierzu unter anderem die beiden - in Bezug auf die Fahrtrichtung - vornliegenden aufbauseitigen Lager der beiden Querlenker näher an der senkrechten Radmittenquerebene angeordnet als die beiden hintenliegenden aufbauseitigen Lager der beiden Querlenker und mit einer abgestimmten radialen und axialen Kennung versehen.

Die elastokinematische Bewegung des Rades bzw. der Radaufhängung unter Belastung im Fahrzustand erfolgt gezielt in Fahrzeuglängsrichtung, insbesondere bei Brems- und Beschleunigungskräften. Hierzu weisen die aufbauseitigen Lager des oberen und unteren Querlenkers in axialer Belastungsrichtung eine weichere Kennung auf als in radialer Belastungsrichtung. Die unteren aufbauseitigen Lager des Querlenkers sind gegenüber den oberen aufbauseitigen Lagern des Querlenkers in radialer Belastungsrichtung mit einer härteren Kennung versehen. Die Lager des oberen Querlenkers weisen dagegen eine weichere axiale Kennung auf als die weiteren Lager des unteren Querlenkers. Insbesondere kann das - in Fahrtrichtung gesehen - vornliegende Lager des oberen Querlenkers in axialer und radialer Richtung auch starr ausgebildet sein und einen Drehpunkt bilden, wobei das hintenliegende Lager in radialer Richtung eine weiche Kennung aufweist.

Ein Ausführungsbeispiel der Erfindung ist in den Zeichnungen dargestellt und wird im folgenden näher beschrieben.

Es zeigen
- Fig. 1: eine schematische Darstellung einer Vorderachsradaufhängung in einer Draufsicht,
- Fig. 2: eine Seitenansicht der Radaufhängung gemäß Fig. 1,
- Fig. 3: eine Vorder- bzw. Rückansicht der Radaufhängung gemäß der Fig. 1 und 2,

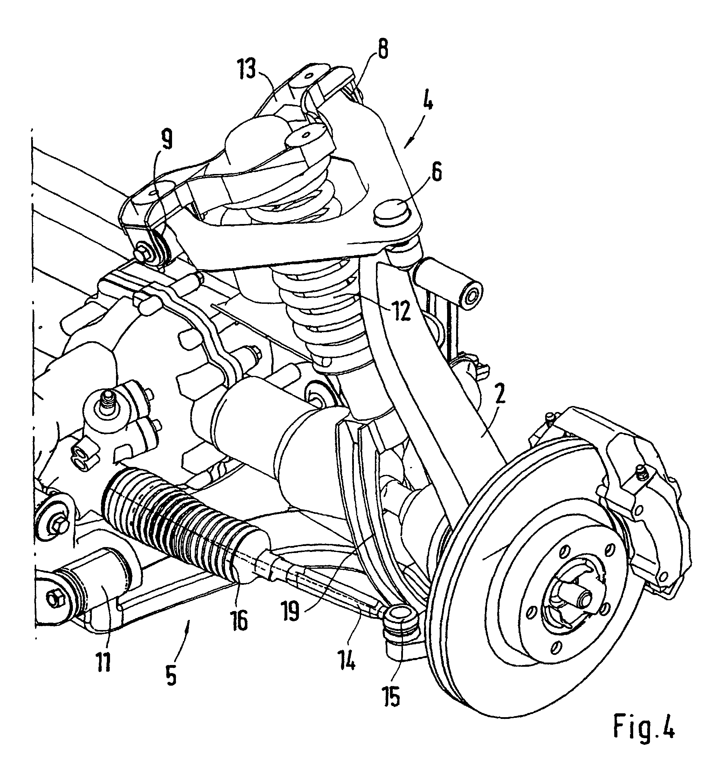

- Fig. 4: eine schaubildliche Darstellung der Vorderachsradaufhängung,
- Fig. 5: eine Darstellung der Radaufhängung von vorne und
- Fig. 6: eine schaubildliche Darstellung der Radaufhängung mit einem unteren Querlenker und aufbauseitigen Lagern sowie einem angelenkten Dämpferbein.

Eine Radaufhängung 1 für eine Vorderachse eines Kraftfahrzeugs bzw. eines Geländewagens umfaßt ein hochgezogenes Schwenklager 2, an dem oberhalb und unterhalb einer Raddrehachse 3 jeweils ein Querlenker 4, 5 über Lager 6, 7 angelenkt ist. Zur schwenkbaren Lagerung am Fahrzeugaufbau weisen die Querlenker 4, 5 jeweils zwei Schwenklager 8, 9 und 10, 11 auf. Am unteren Querlenker 5 ist über ein Gabelelement 19 oder dergleichen ein Dämpferbein 12 bzw. eine Luftfeder abgestützt. Das obere abgekehrte Ende des Dämpferbeines 12 ist in einem Lagertopf 13 gehalten, der mit dem Fahrzeugaufbau verbindbar ist. In Bezug auf die Fahrtrichtung F ist hinter dem unteren Querlenker 5 eine Spurstange 14 vorgesehen, die einerseits über ein Lager 15 mit dem Schwenklager 2 und andererseits mit einer Lenkeinrichtung 16 verbunden. Desweiteren ist mit dem Schwenklager 2 ein Gehänge 17 für einen Stabilisator 18 über ein Lager 17a angelenkt. Der Stabilisator 18 ist - in Bezug auf die Fahrtrichtung F - vor dem unteren Querlenker 5 angeordnet.

Der obere Querlenker 4 ist vorzugsweise als Dreieckslenker in einteiliger Form ausgeführt und weist zur Bildung einer geometrischen Schwenkachse S bzw. einer Nachlaufachse N (in einer Seitenansicht auf das Rad R gesehen) ein schwenklagerseitiges Lager 6 auf. Diese geometrische Schwenkachse ist die Raddrehachse. Korrespondierend zu diesem Lager 6 ist am unteren Querlenker 5 ein weiteres Lager 7 vorgesehen. Durch diese beiden Lager 6 und 7 verläuft die geometrische Schwenkachse S des Rades R. Diese Achse S weist einen Durchstoßpunkt 20 in der Radaufstandsebene 21 auf. Dieser liegt nahe der Spurweite SP und - in Bezug auf die Fahrtrichtung F - vor der senkrechten Radmittenquerebene X-X. Die Spurweite ist abhängig von Reifen/Felge/Einpreßtiefe, d.h. Spurweite mit manchen Rädern kleiner, mit manchen größer, so daß der Durchstoßpunkt entsprechend liegt.

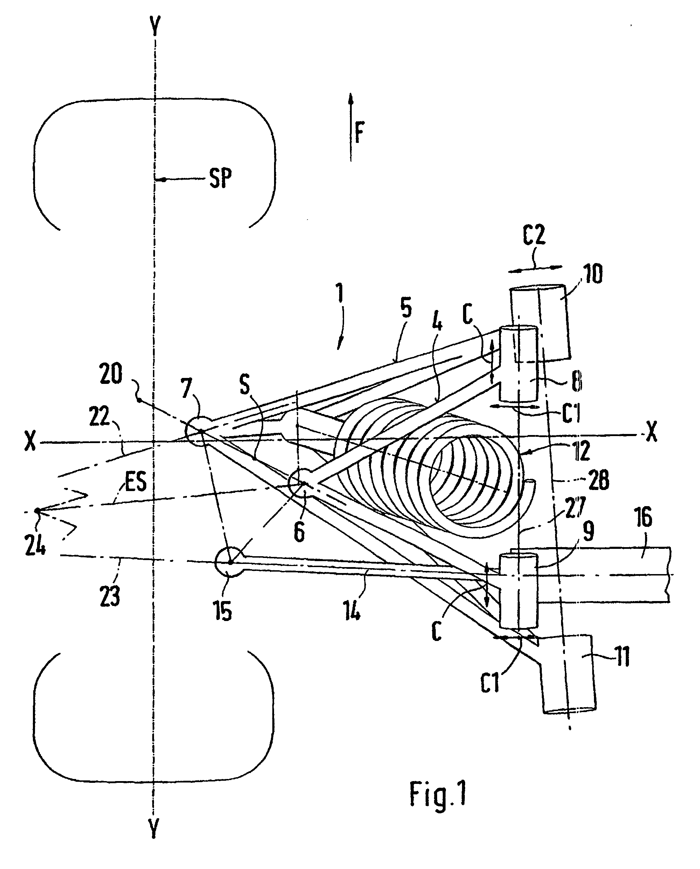

Eine elastokinematische Schwenkachse ES verläuft durch das schwenklagerseitige Lager 6 des oberen Querlenkers 4 und durch einen von Polstrahlen 22, 23 gebildeten Pol 24 (Fig. 1). Der eine Polstrahl 22 verläuft durch das schwenklagerseitige Lager 7 und der andere Polstrahl 23 verläuft durch das schwenklagerseitige Lager 15 der Spurstange 14. Der Polstrahl 22 erstreckt sich vom Lager 7 bis zum Lager 10 und der weitere Polstrahl 23 vom Lager 15 entlang der Spurstange 14. Die elastokinematische Schwenkachse ES verläuft durch den Pol 24 und das Lager 6 weist einen Durchstoßpunkt auf, der außerhalb der Spurweite SP und - in Bezug auf die Fahrtrichtung F - hinter der senkrechten Radmittenquerebene X-X liegt.

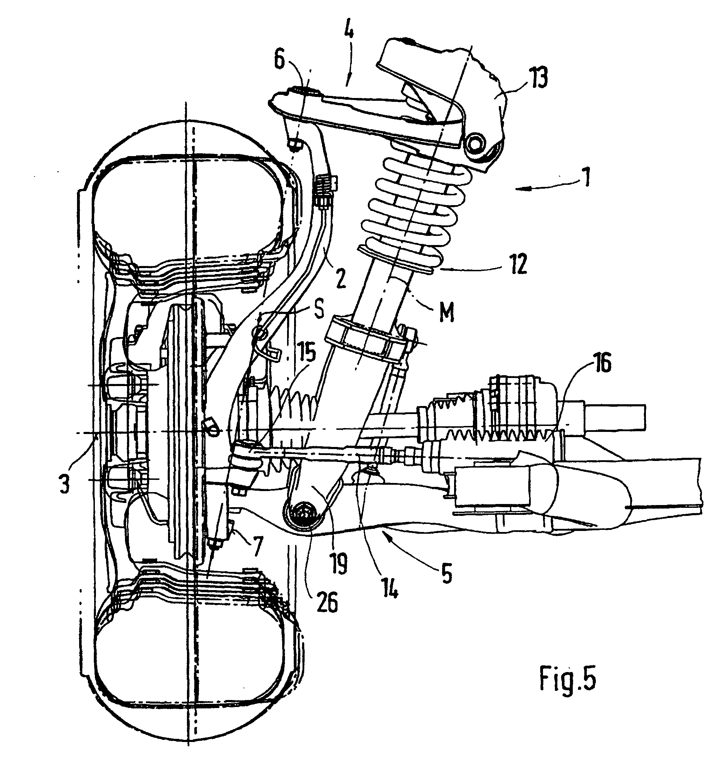

Das Dämpferbein 12 oder eine Luftfeder ist mit ihrem unteren Ende am Querlenker 5 mittels einer Gabel 19, die ein Lenkerteil umgreift und eine Gelenkwelle übergreift, ist über ein Lager 26 gelenkig gehalten (Fig. 5).

Das obere Ende des Dämpferbeines 12 ist in einem Lagertopf 13 abgestützt, in dem auch die Schwenklager 8, 9 des oberen Querlenkers 4 angeordnet sind. Der Lagertopf 13 wird mit dem Fahrzeugaufbau verbunden.

Die beiden Gummilager 8, 9 des Querlenkers 4 sind auf einer Achse 27 schwenkbar gehalten, welche in Fahrtrichtung F ansteigend ist und in Draufsicht gesehen parallel zur senkrechten Radmittenlängsebene Y-Y verläuft. In einem annähernd rechten Winkel zur Achse 27 ist die Mittenachse M des Dämpferbeines 12 angestellt, was in Fig. 2 näher dargestellt ist.

Zur Erzielung einer Antidive- und Antisquat-Wirkung ist zu der entgegen der Fahrtrichtung F nach hinten geneigten Schwenkachse 27, die Schwenkachse 28 der Lager 10, 11 des unteren Querlenkers 5 entgegen der Fahrtrichtung F ansteigend ausgeführt. Die zur Bildung eines Nickpols bildenden Polstrahlen 29, 30 verlaufen jeweils durch die schwenklagerseitigen Lager 6, 7 und parallel zu den Schwenkachsen 27, 28. Der Nickpol N liegt oberhalb der Raddrehachse 3 und relativ weit hinter dem Rad R.

Wie insbesondere aus Fig. 1 näher zu erkennen ist, sind unter anderem zur Erzielung der Lage der geometrischen Schwenkachse S sowie der elastokinematischen Schwenkachse ES, die - in Bezug auf die Fahrtrichtung F - vornliegenden beiden Schwenklager 8, 10 der Querlenker 4, 5 näher an der senkrechten Radmittenquerebene X-X angeordnet als die beiden hintenliegenden Schwenklager 9, 11. Die Schwenkachsen 27, 28 der aufbauseitigen Lager 8, 9 und 10, 11 weisen in der Draufsicht einen in Fahrtrichtung zueinander verlaufenden Verlauf auf.

Zur elastokinematischen leicht untersteuernden Bewegung des Rades bei auf das Rad einwirkenden Kräften, wie Bremskräften, Seitenkräften und Kräften aus Unebenheiten auf der Fahrbahn, weisen die aufbauseitigen Lager 8, 9 und 10, 11 der Querlenker 4, 5 entsprechende Kennungen in axialer und radialer Richtung auf. So sind die aufbauseitigen Schwenklager 8, 9 des oberen Querlenkers 4 in axialer Belastungsrichtung C mit einer weicheren Kennung ausgeführt als in radialer Belastungsrichtung C1, wobei die Schwenklager 8, 9 eine weichere axiale Kennung aufweisen als die Schwenklager 10 und 11. Die aufbauseitigen Lager 10, 11 des unteren Querlenkers 5 sind gegenüber den aufbauseitigen Schwenklagern 8, 9 des oberen Querlenkers 4 in radialer Belastungsrichtung 2 mit einer härteren Kennung ausgeführt Insbesondere kann das Lager 10 in axialer und radialer Richtung starr ausgeführt und das Lager 11 in radialer Richtung mit einer weichen Kennung versehen sein, so daß sich eine Bewegung des Radführungsgliedes 5 um das Lager 10 einstellt.

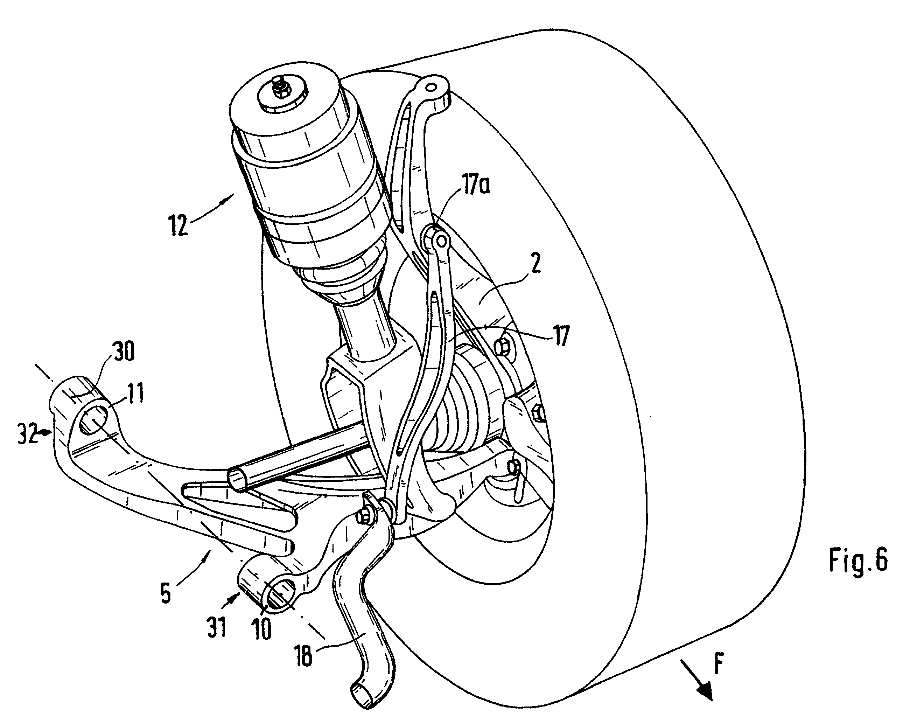

Das Dämpferbein 12 bzw. eine Luftfeder (nicht gezeigt) erstreckt sich mit seinem oberen Ende zwischen zwei Lenkerarmen des Querlenkers 4 und nimmt zwischen der unteren Gabel 25 eine Antriebswelle auf. Wie in Fig. 6 näher dargestellt ist, ist der untere Querlenker 5 mit einem aufgestellten Lagerauge 30 für das Lager 11 und einem in der Ebene des Querlenkers 5 versehenen weiteren Lagerauge 32 zur Aufnahme eines Lagers versehen.

## Patentansprüche

1. Radaufhängung (1) für eine Vorderachse eines Kraftfahrzeugs mit einem Lenkgetriebe (16), 5 insbesondere für ein Geländefahrzeug und mit einem hochgezogenen Schwenklager (2) an dem Doppelquerlenker (4, 5) schwenkbar gelagert sind, wobei der eine Querlenker (4) oberhalb und der weitere Querlenker (5) mit einer Spurstange (14) unterhalb einer Drehachse (3) des Rades (R) angeordnet ist und sich eine geometrische (5) sowie eine elastokinematische Schwenkachse (ES) bildet, wobei ein schwenklagerseitiges Lager (6) des oberen Querlenkers (4) sowie ein Lager (15) 10 der Spurstange (14) am Schwenklager (2) - in Bezug auf die Fahrtrichtung (F) - hinter einer senkrechten Radmittenquerebene (X-X) liegt und daß ein entsprechendes weiteres schwenklagerseitiges Lager (7) des unteren Querlenkers (5) - in Bezug auf die Fahrtrichtung (F) - vor der senkrechten Radmittenquerebene (X-X) angeordnet ist, wobei ein oberes Ende eines Dämpferbeines (12) in einem Lagertopf (13) schwenkbar abgestützt ist, der mit dem Fahrzeugaufbau verbunden wird und zwei auf einer Schwenkachse (27) angeordnete Lager (8, 9) für den oberen Querlenker (4) aufnimmt, **dadurch gekennzeichnet, daß** eine Schwenkachse (27) - in Seitenansicht auf das Rad (R) gesehen - des oberen Querlenkers (4) nach hinten - in Bezug auf die Fahrtrichtung (F) - zur Radaufstandsebene (21) geneigt und eine weitere Schwenkachse (28) von aufbauseitigen Lagern (10, 11) des unteren Querlenkers (5) gebildet nach hinten ansteigend derart ausgeführt sind, daß sich durch parallel zu diesen Achsen (27, 28) durch die Lager (6, 7) verlaufenden Strahlen (29, 30) ein Nickpol (N) für ein Antidive und Antisquat oberhalb der Raddrehachse (3) ergibt und daß die beiden - in Bezug auf die Fahrtrichtung (F) - vornliegenden aufbauseitigen Lager (8, 10) der Querlenker (4, 5) näher an der senkrechten Radmittenquerebene (X-X) angeordnet sind als die beiden hintenliegenden aufbauseitigen Lager (9, 11) der Querlenker (4, 5).

2. Radaufhängung nach Anspruch 1, **dadurch gekennzeichnet, daß** die Schwenkachsen (27, 28) der Lager (8, 9 und 10, 11) der Querlenker (4, 5) - in Fahrtrichtung (F) und in Draufsicht gesehen - zueinanderlaufend angeordnet sind, wobei die Schwenkachse (27) des oberen Lenkers (4) etwa parallel zur senkrechten Radmittenlängsebene (Y-Y) verläuft und - in Seitenansicht gesehen - etwa rechtwinkelig zu dieser Schwenkachse (27) die Dämpferbeinachse (M) unter einem Winkel (a) von etwa 90° angeordnet ist.

3. Radaufhängung nach den Ansprüchen 1 oder 2, **dadurch gekennzeichnet, daß** die aufbauseitigen Lager (8, 9 und 10, 11) des oberen und unteren Querlenkers (4, 5) in axialer Belastungsrichtungen (C) eine weichere Kennung um die Mittenlage aufweisen als in radialen Betastungsrichtungen (C1), und die Schwenklager (8, 9) eine weichere axiale Kennung aufweisen als die weiteren Schwenklager (10, 11) des unteren Querlenkers (5) und daß die unteren aufbauseitigen Lager (10, 11) dieses Querlenkers (5) gegenüber den oberen aufbauseitigen Lagern (8, 9) des Querlenkers (4) in radialer Belastungsrichtung (C2) eine härtere Kennung aufweisen.

4. Radaufhängung nach den Ansprüchen 2 oder 3, **dadurch gekennzeichnet, daß** das Lager (10) in radialer und axialer Richtung starr ausgebildet ist und einen Drehpunkt bildet und das weitere Lager (11) in radialer Richtung mit einer nachgiebigen Kennung versehen ist.

## Claims

1. A wheel suspension (1) for a front axle of a motor vehicle, having a steering mechanism (16), in particular for an off-road vehicle and with a raised pivot bearing (2) on which double wishbones (4, 5) are mounted in a pivotable manner, wherein one wishbone (4) is arranged above and the other wishbone (5) with a steering tie rod (14) is arranged below a rotational axis (3) of the wheel (**R**) and a geometric (5) and an elastokinematic pivot axis (**ES**) is formed, wherein a bearing (6) of the upper wishbone (4) towards the pivot bearing and a bearing (15) of the steering tie rod (14) on the pivot bearing (2) [are] situated behind a vertical median transverse plane (**X-X**) of the wheel, with respect to the direction of travel (**F**), and a corresponding further bearing (7) of the lower wishbone (5) towards the pivot bearing is situated in front of the vertical median transverse plane (**X-X**) of the wheel, with respect to the direction of travel (**F**), wherein an upper end of a shock-absorber strut (12) is supported in a pivotable manner in a bearing cup (13) which is connected to the vehicle body and which receives two bearings (8, 9) arranged on a pivot axis (27) for the upper wishbone (4), **characterized in that** a pivot axis (27) - as seen in a side view towards the wheel (R) - of the upper wishbone (4) is inclined at the rear - with respect to the direction of travel (F) - towards the wheel contact plane (21), and a further pivot axis (28) formed by bearings (10, 11) of the lower wishbone (5) towards the body is designed rising towards the rear in such a way that a pitch pole (N) for an anti-dive and an anti-squat is formed above the rotational axis (3) of the wheel by radials (29, 30) extending parallel to the said axes (27, 28) through the bearings (6, 7), and the two bearings (8, 10) - situated in front with respect to the direction of travel (F) and towards the body - of the wishbones (4, 5) are arranged closer to the vertical median transverse plane (**X-X**) of the wheel than the two bearings (9, 11) of the wishbones (4, 5) situated at the rear and towards the body.

2. A wheel suspension according to Claim 1, **characterized in that** the pivot axes (27, 28) of the bearings (8, 9 and 10, 11) of the wishbones (4, 5) are arranged converging, as seen in the direction of travel (F) and in plan view, wherein the pivot axis (27) of the upper wishbone (4) extends substantially parallel to the vertical median longitudinal plane (**Y-Y**) of the wheel and - as seen in side view - the axis (**M**) of the shock-absorber strut is arranged substantially at a right angle to the said pivot axis (27) at an angle (**a**) of approximately 90°.

3. A wheel suspension according to Claim 1 or 2, **characterized in that** the bearings (8, 9 and 10, 11) - towards the body - of the upper and lower wishbones (4, 5) have a more yielding characteristic about the middle position in axial load directions (C) than in radial load directions (C1), and the pivot bearings (8, 9) have a more yielding axial characteristic than the other pivot bearings (10, 11) of the lower wishbone (5), and the lower bearings (10, 11) of the said wishbone (5) towards the body have a harder characteristic in the radial load direction (C2) than the upper bearings (8, 9) of the wishbone (4) towards the body.

4. A wheel suspension according to Claim 2 or 3, **characterized in that** the bearing (10) is made rigid in the radial and axial direction and forms a fulcrum, and the other bearing (11) is provided with a yielding characteristic in the radial direction.

## Revendications

1. Suspension de roue (1) pour un essieu avant d'un véhicule automobile comportant un mécanisme de direction (16), en particulier pour un véhicule tout-terrain, et comportant un palier de pivotement (2) relevé sur lequel sont montés pivotants des bras oscillants transversaux doubles (4, 5), dans laquelle un bras oscillant transversal (4) est disposé au- dessus d'un axe de rotation (3) de la roue (R) et l'autre bras transversal (5) avec une barre d'accouplement (14) au-dessous de cet axe, et un axe de pivotement géométrique (5) ainsi qu'un axe de pivotement élasto- cinématique (ES) étant formés, dans laquelle un palier (6), côté palier de pivotement, du bras oscillant transversal supérieur (4) ainsi qu'un palier (15) de la barre d'accouplement (14) sur le palier pivotant (2) se trouvent derrière - par rapport au sens de marche (F) - un plan transversal médian vertical (X-X) de la roue, et un autre palier (7) correspondant, côté palier de pivotement, du bras oscillant transversal inférieur (5), est disposé devant - par rapport au sens de marche (F) - le plan médian transversal vertical (X-X) de la roue, dans laquelle une extrémité supérieure d'une jambe d'amortisseur (12) est soutenue pivotante dans un pot de palier (13) qui est relié à la carrosserie du véhicule, et reçoit deux paliers (8, 9) disposés sur un axe de pivotement (27), pour le bras transversal supérieur (4), **caractérisée en ce qu'**un axe de pivotement (27) - dans une vue de côté de la roue (R) - du bras oscillant transversal supérieur (4), est incliné vers l'arrière - par rapport au sens de marche (F) - vers le plan d'appui (21) de la roue, et un autre axe de pivotement (28), formé par des paliers (10, 11) côté carrosserie du bras oscillant transversal inférieur (5), montant vers l'arrière, sont réalisés de manière que du fait de rayons (29, 30) s'étendant parallèlement à ces axes (27, 28) à travers les paliers (6, 7), il résulte un pôle de tangage (N) pour un dispositif anticabreur et antidécollage au-dessus de l'axe de rotation (3) de la roue, et **en ce que** les deux paliers (8, 10) côté carrosserie, situés à l'avant - par rapport au sens de marche (F) - des bras oscillants transversaux (4, 5), sont disposés plus près du plan médian transversal vertical (X-X) de la roue que les deux paliers (9, 11) côté carrosserie, situés à l'arrière, des bras oscillants transversaux (4, 5).

2. Suspension de roue selon la revendication 1, **caractérisée en ce que** les axes de pivotement (27, 28) des paliers (8, 9 et 10, 11) des bras oscillants transversaux (4, 5) - vus dans le sens de marche (F) et de dessus - sont disposés de manière à s'étendre l'un vers l'autre, l'axe de pivotement (27) du bras oscillant supérieur (4) s'étendant approximativement parallèlement au plan médian longitudinal vertical (Y-Y) de la roue et - vu de côté - à peu près perpendiculairement à cet axe de pivotement (27), l'axe de la jambe d'amortisseur (M) étant disposé suivant un angle (a) d'environ 90°.

3. Suspension de roue selon les revendications 1 ou 2, **caractérisée en ce que** les paliers (8, 9 et 10, 11) côté carrosserie du bras oscillant transversal supérieur et du bras oscillant transversal inférieur (4, 5) présentent, dans des directions axiales de charge (C), une caractéristique plus souple autour de la position centrale que dans des directions radiales de charge (C1), et les paliers de pivotement (8, 9) présentent une caractéristique axiale plus souple que les autres paliers de pivotement (10, 11) du bras oscillant transversal inférieur (5) et **en ce que** les paliers (10, 11) inférieurs côté carrosserie de ce bras oscillant transversal (5) présentent, par rapport aux paliers supérieurs (8, 9) côté carrosserie du bras oscillant transversal (4), une caractéristique plus dure dans la direction radiale de charge (C2).

4. Suspension de roue selon les revendications 2 ou 3, **caractérisée en ce que** le palier (10) est réalisé rigide dans la direction radiale et la direction axiale et forme un centre de rotation, et l'autre palier (11) est pourvu, dans la direction radiale, d'une caractéristique souple.
